# EUROPEAN PATENT APPLICATION

(11) **EP 4 825 460 A1**
(43) Date of publication of application: **21.10.2026**
(21) Application number: 25215471.1
(22) Date of filing: 13.11.2025
(51) Int. Cl.: A63C 19/10, B65G 69/30

(54) **FOLDABLE RAMP**

(71) Applicant: Chen, Wang-Chuan, Taichung City (TW)
(72) Inventor: Chen, Wang-Chuan, Taichung City (TW)
(74) Representative: Michalski Hüttermann & Partner mbB

(57) **Abstract**

A foldable ramp includes a body (10), a supporting member (20), and a fastening member (30). The body (10) has an inclined surface (11), an end wall (12), and an inner top surface (13). The end wall (12) has a first fixing hole (121), and the inner top surface (13) has a second fixing hole (131). The supporting member (20) is pivotally connected to the body (10) and is provided with a first through hole (21) and a second through hole (22). The fastening member (30) is configured to pass through the first through hole (21) or the second through hole (22) and to be detachably connected to the first fixing hole (121) or the second fixing hole (131). The supporting member (20) is switchable between a use position and a storage position, allowing the ramp to provide stable support when unfolded and to reduce its volume when folded.

## Description

### BACKGROUND OF THE INVENTION

The present invention relates to a ramp for sports use, and more particularly to a foldable ramp.

Extreme sports cover a wide range of activities, such as freestyle skateboarding, BMX, and aggressive inline skating. These sports rely on athletes' skills in combination with various terrain structures to perform tricks and stunts, among which ramps are one of the most commonly used terrain apparatuses. By using ramps, athletes can perform diverse and challenging maneuvers.

However, most conventional ramps have fixed geometrical structures, which occupy a large amount of space during transportation and storage. This not only increases transportation and warehousing costs, but also makes the setup and relocation of large-scale events or competitions cumbersome, thereby limiting the flexibility and adaptability of the ramp.

### SUMMARY OF THE INVENTION

An objective of the present invention is to provide a foldable ramp, which includes a body, a supporting member, and a fastening member. The body has an inclined surface, an end wall connected to the inclined surface, and an inner top surface opposite to the inclined surface. The end wall is provided with a first fixing hole, and the inner top surface is provided with a second fixing hole. The supporting member is pivotally connected to the body and adjacent to the end wall, and the supporting member is provided with a first through hole and a second through hole. The fastening member is configured to pass through the first through hole and be detachably connected to the first fixing hole, or to pass through the second through hole and be detachably connected to the second fixing hole.

In one embodiment, the first fixing hole and the second fixing hole are respectively provided with internal thread portions, and the fastening member is provided with an operation portion and an external thread portion corresponding to the internal thread portions.

In one embodiment, the supporting member further includes a first groove communicating with the first through hole and a second groove communicating with the second through hole. The fastening member further includes a flange located between the operation portion and the external thread portion. When the fastening member passes through the first through hole and the external thread portion is connected to the internal thread portion of the first fixing hole, the operation portion and the flange are positioned in the first groove, and the flange abuts against the bottom of the first groove. When the fastening member passes through the second through hole and the external thread portion is connected to the internal thread portion of the second fixing hole, the operation portion and the flange are positioned in the second groove, and the flange abuts against the bottom of the second groove.

In one embodiment, the first groove is located on an inner side of the supporting member, and the second groove is located on an outer side of the supporting member.

In one embodiment, the inner top surface further includes a protruding column and a plurality of rib portions, the second fixing hole is disposed on the protruding column, and the rib portions are arranged in a crisscross pattern.

In one embodiment, the body further includes two side walls. When the fastening member passes through the second through hole and the external thread portion is connected to the internal thread portion of the second fixing hole, the supporting member is positioned between the end wall, the inner top surface, and the two side walls.

In one embodiment, the body is provided with supporting bevel edges respectively located on the sides of the side walls opposite to the end wall. The supporting member has a pivoting end pivotally connected to the body and a supporting end opposite to the pivoting end. When the fastening member passes through the first through hole and the external thread portion is connected to the internal thread portion of the first fixing hole, the supporting member is unfolded to a use position, and the supporting bevel edges and the supporting end rest on the ground so that the inclined surface forms a usable ramp. When the fastening member passes through the second through hole and the external thread portion is connected to the internal thread portion of the second fixing hole, the supporting member is folded to a storage position and accommodated within the body.

Accordingly, the foldable ramp of the present invention enables the supporting member to switch between a use position and a storage position through cooperation with the fastening member, thereby providing stable ramp support in use and reducing overall volume for convenient transport and storage.

The present invention will become clearer in light of the following detailed description of illustrative embodiments of this invention described in connection with the drawings.

### BRIEF DESCRIPTION OF DRAWINGS

FIG. 1 is a perspective view of a foldable ramp according to an embodiment of the present invention, showing the supporting member in the use position.
FIG. 2 is an exploded perspective view of the foldable ramp of FIG. 1.
FIG. 3 is a cross-sectional view of the foldable ramp of FIG. 1, showing the supporting member in the use position.
FIG. 4 is another cross-sectional view of the foldable ramp of FIG. 1, showing the supporting member in the storage position.
FIG. 5 is another perspective view of the foldable ramp according to the embodiment of the present invention, showing the supporting member in the storage position.

### DETAILED DESCRIPTION OF THE INVENTION

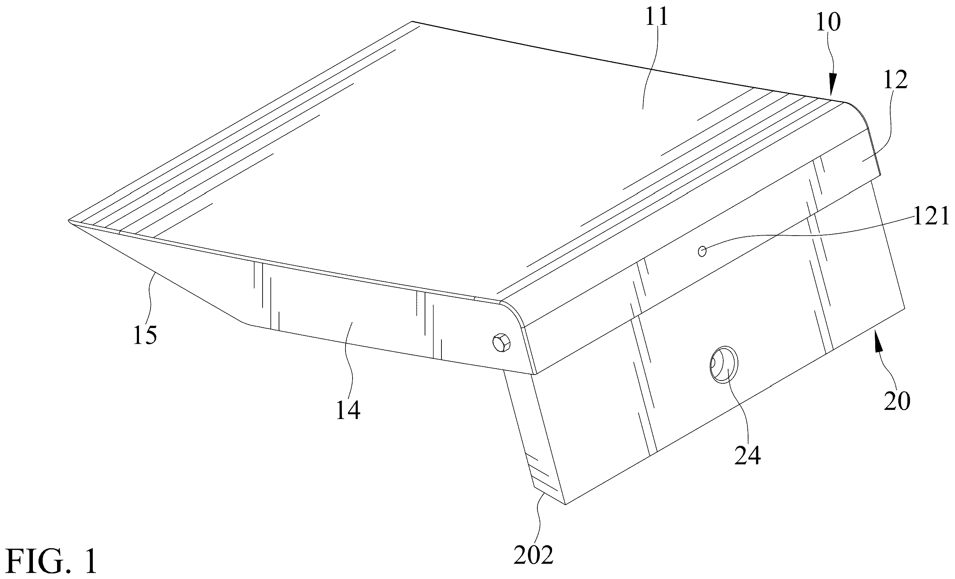

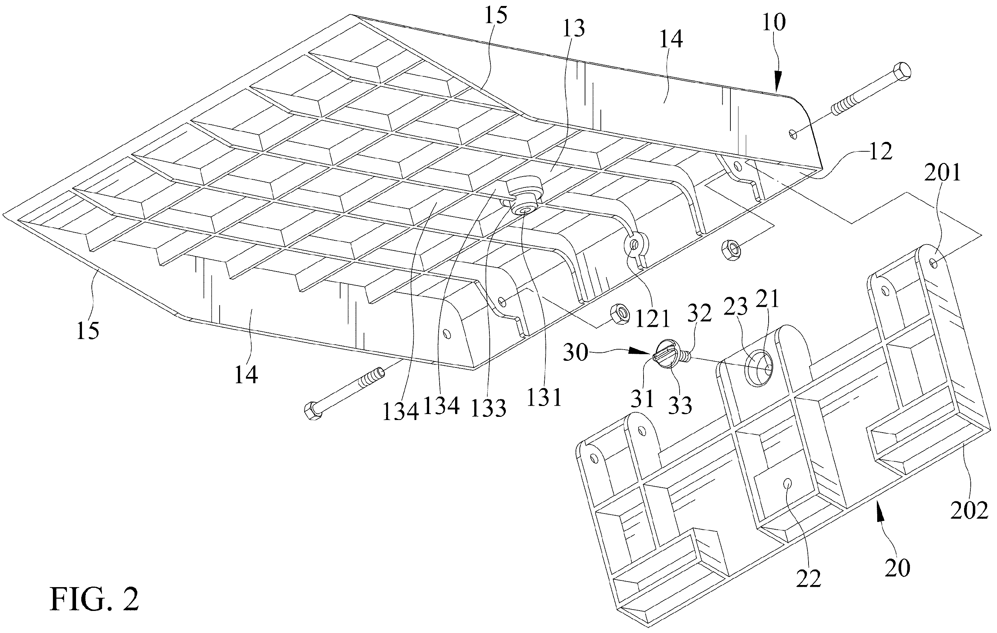

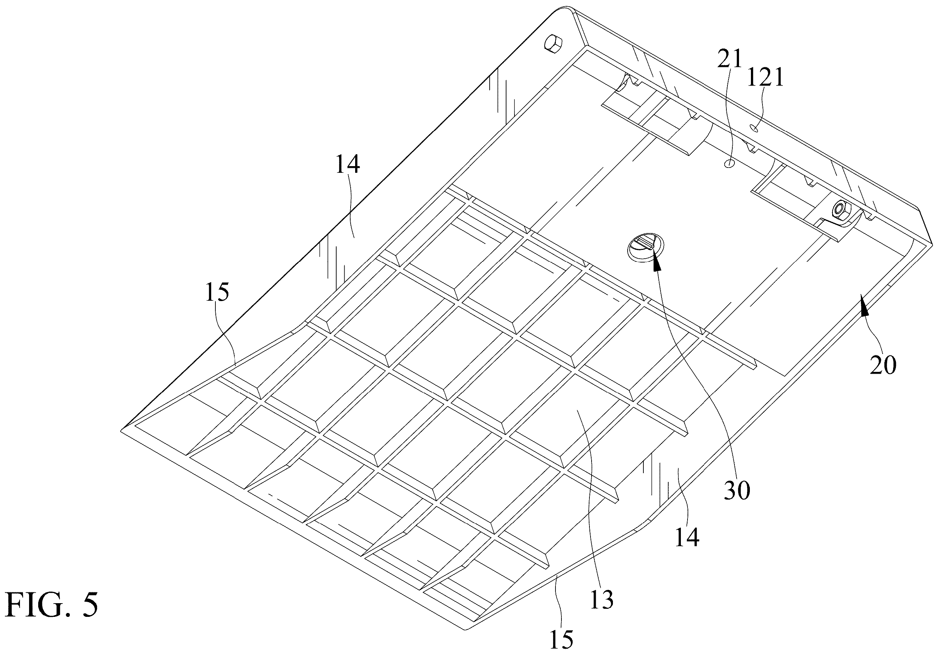

Referring to FIGS. 1 to 5, which respectively illustrate a perspective view, an exploded view, and cross-sectional views of a foldable ramp according to an embodiment of the present invention. The present invention provides a foldable ramp including a body 10, a supporting member 20, and a fastening member 30.

The body 10 has an inclined surface 11, an end wall 12 connected to the inclined surface 11, an inner top surface 13 opposite to the inclined surface 11, two side walls 14, and two supporting bevel edges 15. The end wall 12 is provided with a first fixing hole 121, and the inner top surface 13 is provided with a second fixing hole 131. In this embodiment, the first fixing hole 121 and the second fixing hole 131 may respectively be provided with internal thread portions 122 and 132.

The inner top surface 13 is further provided with a protruding column 133 and a plurality of rib portions 134. The second fixing hole 131 is disposed on the protruding column 133, and the plurality of rib portions 134 are arranged in a crisscross pattern to enhance the structural strength and rigidity, thereby preventing deformation of the ramp under load. The two supporting bevel edges 15 are respectively disposed on sides of the two side walls 14 opposite to the end wall 12 to provide firm ground support when the ramp is unfolded for use.

The supporting member 20 is pivotally connected to the body 10 and disposed adjacent to the end wall 12. The supporting member 20 has a pivoting end 201 pivotally connected to the body 10 and a supporting end 202 opposite to the pivoting end 201. The supporting member 20 is provided with a first through hole 21, a second through hole 22, a first groove 23 communicating with the first through hole 21, and a second groove 24 communicating with the second through hole 22. The first groove 23 is located on an inner side of the supporting member 20, and the second groove 24 is located on an outer side of the supporting member 20.

The fastening member 30 is configured to pass through the first through hole 21 and detachably connect to the first fixing hole 121, or to pass through the second through hole 22 and detachably connect to the second fixing hole 131. The fastening member 30 is provided with an operation portion 31 for a user to rotate to tighten or loosen, an external thread portion 32 corresponding to the internal thread portions 122, 132, and a flange 33 located between the operation portion 31 and the external thread portion 32.

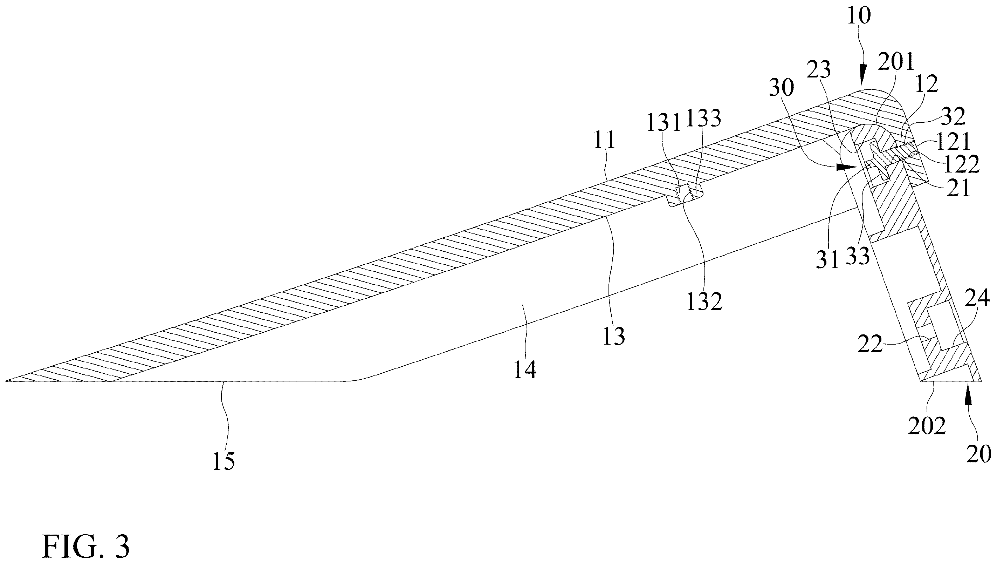

As shown in FIG. 3, when the fastening member 30 passes through the first through hole 21 and the external thread portion 32 is connected to the internal thread portion 122 of the first fixing hole 121, the operation portion 31 and the flange 33 are positioned in the first groove 23, and the flange 33 abuts against a bottom of the first groove 23. In this state, the supporting member 20 is unfolded to a use position, and the supporting bevel edges 15 and the supporting end 202 cooperatively rest on the ground so that the inclined surface 11 forms a usable ramp.

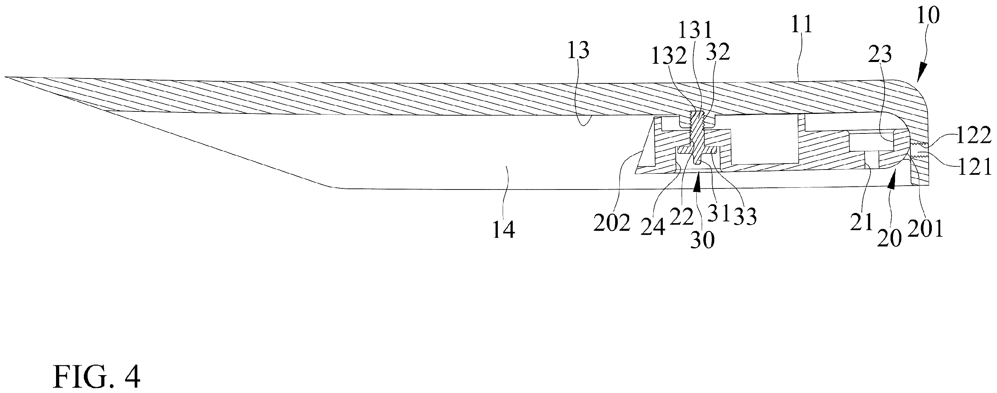

As shown in FIG. 4, when the fastening member 30 passes through the second through hole 22 and the external thread portion 32 is connected to the internal thread portion 132 of the second fixing hole 131, the operation portion 31 and the flange 33 are positioned in the second groove 24, and the flange 33 abuts against a bottom of the second groove 24. In this state, the supporting member 20 is folded to a storage position and fully accommodated within the body 10 to be positioned between the end wall 12, the inner top surface 13, and the two side walls 14, resulting in a compact overall shape that facilitates carrying and storage.

Through the above structural configuration, the present invention provides the following advantages.
1. Simple structure and convenient operation: The present invention utilizes a single fastening member 30 to achieve switching of the supporting member 20 between a use position and a storage position. The operation is simple and requires no additional tools, allowing a user to quickly unfold or fold the ramp.
2. Reliable locking and stable support: The external thread portion 32 of the fastening member 30 can be firmly and detachably engaged with the internal thread portions 122, 132, and the flange 33 cooperates with the first and second grooves 23, 24 to provide axial positioning, ensuring that the ramp remains stable and free from looseness under load.
3. Compact storage and easy portability: When folded, the supporting member 20 can be fully accommodated within the body 10, resulting in a flat and compact exterior. This not only facilitates storage but also enhances portability and stackability, making the ramp suitable for mobile or temporary setups.
4. Enhanced strength and durability: The protruding column 133 and the crisscross rib portions 134 on the inner top surface 13 effectively enhance the structural rigidity and compressive resistance of the body 10, enabling the ramp to withstand greater loads without deformation and thereby extending its service life.

## Claims

1. A foldable ramp, comprising:
a body (10) having an inclined surface (11), an end wall (12) connected to the inclined surface (11), and an inner top surface (13) opposite to the inclined surface (11), wherein the end wall (12) is provided with a first fixing hole (121), and wherein the inner top surface (13) is provided with a second fixing hole (131);
a supporting member (20) pivotally connected to the body (10) and disposed adjacent to the end wall (12), wherein the supporting member (20) is provided with a first through hole (21) and a second through hole (22); and
a fastening member (30) configured to pass through the first through hole (21) and detachably connect to the first fixing hole (121), or to pass through the second through hole (22) and detachably connect to the second fixing hole (131).

2. The foldable ramp of claim 1, wherein the first fixing hole (121) and the second fixing hole (131) are respectively provided with internal thread portions (122, 132), and wherein the fastening member (30) is provided with an operation portion (31) and an external thread portion (32) corresponding to the internal thread portions (122, 132).

3. The foldable ramp of claim 2, wherein the supporting member (20) is further provided with a first groove (23) communicating with the first through hole (21) and a second groove (24) communicating with the second through hole (22), wherein the fastening member (30) is further provided with a flange (33) located between the operation portion (31) and the external thread portion (32);
when the fastening member (30) passes through the first through hole (21) and the external thread portion (32) is connected to the internal thread portion (122) of the first fixing hole (121), the operation portion (31) and the flange (33) are positioned in the first groove (23), and the flange (33) abuts against a bottom of the first groove (23);
when the fastening member (30) passes through the second through hole (22) and the external thread portion (32) is connected to the internal thread portion (132) of the second fixing hole (131), the operation portion (31) and the flange (33) are positioned in the second groove (24), and the flange (33) abuts against a bottom of the second groove (24).

4. The foldable ramp of claim 2, wherein the first groove (23) is located on an inner side of the supporting member (20), and wherein the second groove (24) is located on an outer side of the supporting member (20).

5. The foldable ramp of claim 2, wherein the inner top surface (13) is further provided with a protruding column (133) and a plurality of rib portions (134), wherein the second fixing hole (131) is disposed on the protruding column (133), and wherein the plurality of rib portions (134) are arranged in a crisscross pattern.

6. The foldable ramp of claim 2, wherein the body (10) further has two side walls (14);
when the fastening member (30) passes through the second through hole (22) and the external thread portion (32) is connected to the internal thread portion (132) of the second fixing hole (131), the supporting member (20) is positioned between the end wall (12), the inner top surface (13), and the two side walls (14).

7. The foldable ramp of claim 6, wherein the body (10) further has two supporting bevel edges (15) each located on one side of a corresponding side wall (14) opposite to the end wall (12), wherein the supporting member (20) has a pivoting end (201) pivotally connected to the body (10) and a supporting end (202) opposite to the pivoting end (201);
when the fastening member (30) passes through the first through hole (21) and the external thread portion (32) is connected to the internal thread portion (122) of the first fixing hole (121), the supporting member (20) is unfolded to a use position, and the two supporting bevel edges (15) and the supporting end (202) rest on the ground so that the inclined surface (11) forms a usable ramp;
when the fastening member (30) passes through the second through hole (22) and the external thread portion (32) is connected to the internal thread portion (132) of the second fixing hole (131), the supporting member (20) is folded to a storage position and accommodated within the body (10).
